# EUROPEAN PATENT SPECIFICATION

(11) **EP 1 128 896 B1**
(45) Date of publication and mention of the grant of the patent: **12.07.2006**
(21) Application number: 99947095.8
(22) Date of filing: 06.09.1999
(51) Int. Cl.: B01D 57/02, B01D 61/42, B01D 61/44, G01N 27/447

(54) **REMOVABLE CARTRIDGE FOR MACROMOLECULE PURIFICATION**
AUSTAUSCHBARE KASSETTE ZUR REINIGUNG VON MAKROMOLEKÜLEN
CARTOUCHE AMOVIBLE DE PURIFICATION DE MACROMOLECULES

(30) Priority: 07.09.1998 AU PP576598
(43) Date of publication of application: 05.09.2001
(73) Proprietor: GRADIPORE LIMITED, Frenchs Forest, New South Wales 2086 (AU)
(72) Inventor: OGLE, David, Cowan, NSW 2081 (AU)
(74) Representative: Jump, Timothy John Simon
(86) International application number: PCT/AU1999/000732
(87) International publication number: WO 2000/013776

(56) References cited:
- EP-A- 0 253 749
- EP-A- 0 369 945
- WO-A-88/07406
- WO-A-94/22904
- DE-A- 4 116 179
- US-A- 3 989 613
- US-A- 5 039 386

## Description

### Field of the Invention

This invention relates to a cartridge for use in a macromolecular purification apparatus and to an apparatus comprising said cartridge.

### Background of the Invention

European patent No 352286 relates to improvements in the separation of macromolecular solutes by a process known as electrophoretic separation, in particular fixed boundary electrophoretic separation. In fixed boundary electrophoresis, as is explained in more detail below in the description following the Brief Description of the Drawings, a semi-permeable membrane (hereinafter referred to as a separation membrane) acts to separate two streams of liquid carrying macromolecular solutes such as proteins, referred to as the upstream and the downstream. The streams pass between charged electrodes and at least one macromolecular solute migrates across the membrane from one stream to the other under the influence of the electric field. The apparatus also includes flow paths for buffer solution and further semi-permeable membranes, hereinafter referred to as restriction membranes, disposed between the electrodes and the separation membrane. The restriction membranes allow the passage of ions but not macromolecules.

The present invention relates to developments and improvements over the ideas and principals disclosed in EP 352286 and in particular to refinements and improvements to the apparatus to make the technology easier to use and operate.

In particular, it is desired to provide an apparatus which is easier to fill, empty, clean and reassemble in contrast to existing apparatus which tends to be formed substantially integrally with storage tanks, pumps, cooling apparatus and similar features making the apparatus expensive and difficult to handle and clean.

### Summary of the Invention

In a first aspect the invention encompasses a removable cartridge for use in an electrophoresis apparatus, the cartridge including a housing and containing a separation membrane, a first flow path defined along one side of the separation membrane, and a second flow path defined along an opposite side of the separation membrane and restriction membranes for isolating buffer flow from the first and second flow paths.

The cartridge may further include gaskets positioned either side of the restriction membranes for sealing the components between the upper and lower connection blocks. The first and second flow paths may be defined by first and second grid elements. Each grid element may be generally planar The grid element and restriction membranes may include a through hole located near each end of the element/membrane for the passage of upstream and downstream liquid therethrough to the grid element. The grid element may include a central elongate at least part cut out portion which in the assembled cartridge in conjunction with the two adjacent membranes, defines a flow path or channel from the hole one end of the grid element to the hole at the other end. The flow path may include a lattice for supporting the separation membrane and for mixing the flow.

All the elements of the cartridge apart form the cartridge housing or casing are generally planar and are assembled together in a sandwich type construction.

In a second aspect, the present invention provides an apparatus for free flow electrophoresis comprising a removable cartridge according to the first aspect between an upper and a lower connection block

In one particular preferred embodiment, the upper and lower connection blocks define inlet and outlet means for feeding liquid into the first flow path (the downstream) and into the second flow path (the upstream), in the cartridge.

The upper and lower connection blocks may house electrodes and connection means for connecting the electrodes to a power source.

In one particularly preferred embodiment, the electrodes are made of titanium mesh coated with platinum.

The upper and lower connection blocks may be made of any suitable material for example a plastics material. The blocks may be transparent or opaque.

The upper and lower electrodes may be housed in recesses or channels defined in the upper and lower connection blocks, respectively. Those channels may define part of the boundaries of the buffer flow path for the apparatus. The other boundary for the buffer flow path is defined by the restriction membranes housed in the cartridge which form the upper and lower faces of the cartridge. The upper and lower connection blocks may define inlets and outlets for buffer flow.

### Brief Description of the Drawings

The invention will now be described, by way of example only, and with reference to the accompanying drawings in which:-
Figure 1 schematically illustrates charge based separation;
Figure 2 schematically illustrates size based separation;
Figure 3 illustrates concentration;
Figure 4 illustrates dialysis;
Figure 5 is a schematic diagram of a separation unit embodying the present invention;
Figure 6 is a schematic diagram of an apparatus including the separation unit of Figure 5;
Figure 7 is a section through a clamp means which forms part of the apparatus of the present invention;
Figure 8 is an exploded view of a cartridge for use with the present invention;
Figure 9A is a plan view of a grid element which is a component of the cartridge of Figure 8;
Figure 9B is a reverse plan view of the grid element of Figure 9A;
Figure 10 is a cross-section on lines X-X of Figure 9A;
Figure 11 is a cross-section on lines XI-XI of Figure 9A;
Figure 12 is a cross-section on lines XII-XII of Figure 9A; and
Figure 13 is a plan view of a grid element for a second embodiment of the present invention.

### Detailed Description of the Preferred Embodiment

Before describing the preferred embodiment in detail, the principal of operation of the apparatus will first be described.

An electric field applied to macromolecules, such as proteins, in solution, will cause the proteins to move to the electrodes. If the protein has a positive charge, it will move to the negative electrode (cathode). Conversely, a negatively charged protein will move to the positive electrode (anode).

In the electrophoresis apparatus of the present invention, a separation membrane is placed in the electric field and molecules are selectively transported between two circulating streams called the upstream and the downstream. The particular separation membrane used will vary for different applications and generally has a large, but well defined, pore size. The upstream and downstream are isolated from the electrodes by buffer streams and by two restriction membranes. The restriction membranes allow the movement of small molecules and ions up to a molecular weight of about 3,000 daltons.

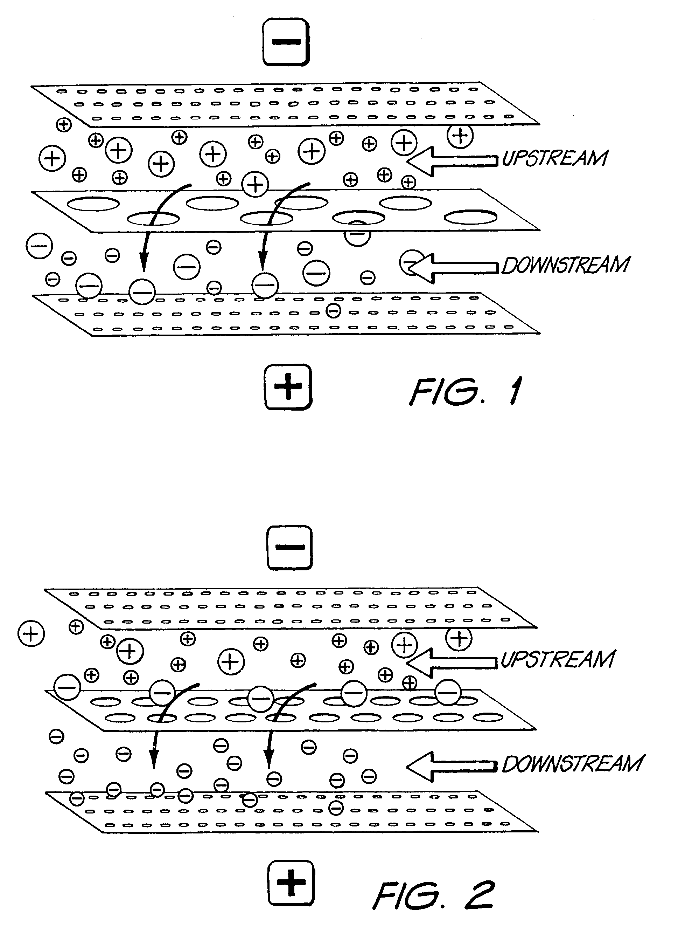

There are four modes of operating the apparatus of the present invention. These are set out below and are illustrated in Figures 1 to 4, respectively.

### 1. Charge based separation

In principal, any two molecules with different pIs can be separated by carrying the separation out at a pH between the two pIs. The pI is the pH of a solution in which the molecule has neutral charge, thus by changing the pH of the solution in which a molecule is present, the effective charge of that molecule can be changed.

Thus in a solution with a pH between the two pIs, one molecule will have a positive charge, and will move towards the cathode and be contained in the upstream. The other molecule will have a negative charge and will be contained in the downstream as it moves towards the anode. Figure 1 illustrates charge based separation.

### 2. Sized Based Separation

Components with different molecular weights can be separated on the basis of pore size. Figure 2 shows an example of separation based on size. Two proteins which are both negatively charged, are separated because the larger molecules are unable to migrate through the smaller pores of the separation membrane. Careful combination of pore size and pH can often allow the isolation of a single component from a complex mixture in one run.

(Examples are Mab from ascitic fluid and ovalbumin, lysozyme, or avidin from egg white, and fibrinogen from plasma).

### 3. Concentration

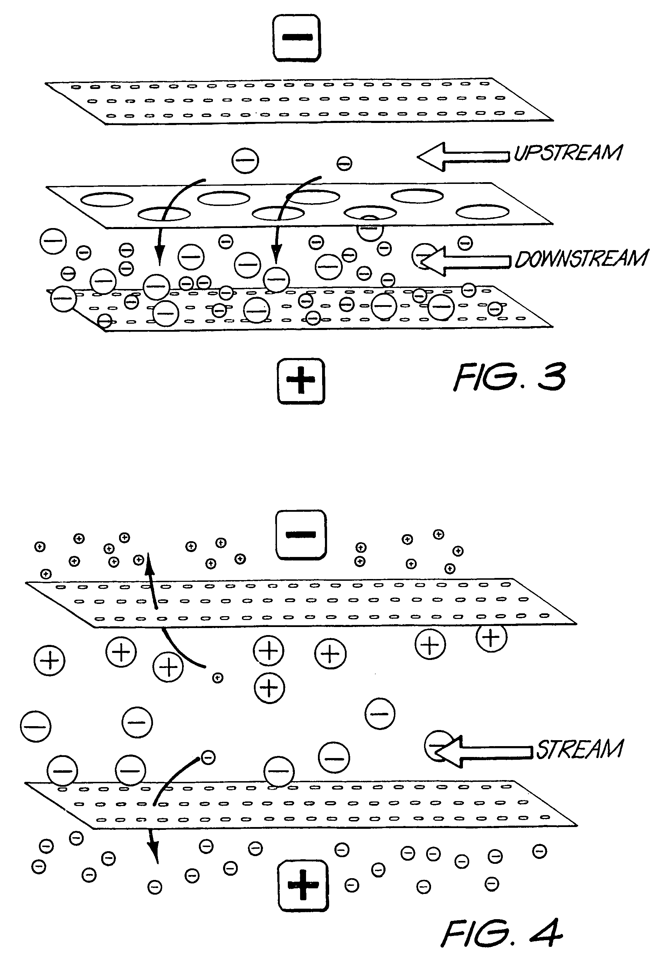

Figure 3 illustrates concentration, which utilises the largest pore size separation membrane (1,000 kDa). The large pore sizes enable the rapid transportation of proteins across the separation membrane from a large volume upstream solution to a small volume downstream solution. In this process a pH is selected in which all of the desired proteins will have the same charge. Typically, pH 8.3 is selected since most proteins will have a negative charge at this pH. In many applications, purification can be achieved at the same time as concentration.

### 4. Dialysis

Figure 4 illustrates dialysis. The apparatus of the present invention can operate for desalting. The separation membrane is not necessary for dialysis, which can be performed with or without this membrane. The ions are removed from the sample by passing through the restriction membranes and then are washed away by the outer buffer streams. This process also occurs during standard fractionation or concentration, but in these cases the ions are recirculated. When being used for extensive dialysis, the outer buffer, where the ions collect, should be exchanged for fresh buffer solution at regular intervals.

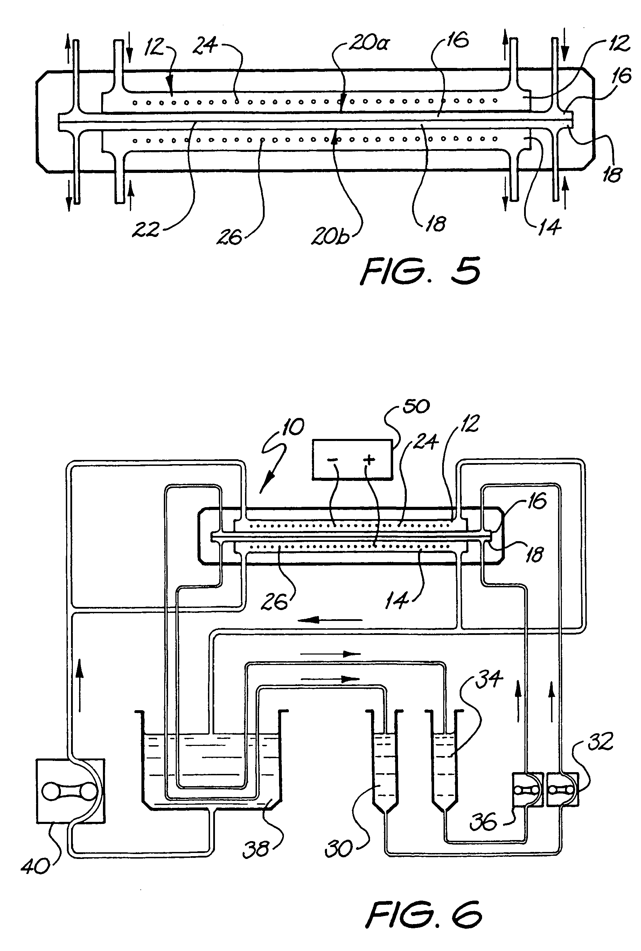

Having outlined the principals of operation of the present invention, we now turn to a description of the apparatus itself with reference to Figure 5 which is a schematic cross-section of a separation unit embodying the present invention.

The separation unit comprises an electrolytical cell consisting of four chambers. The two outer chambers 12 and 14 house the electrodes and a flow of buffer passes through these chambers. The inner chambers 16, 18 are the upstream and downstream channels which are separated from the outer buffer chambers by restriction membranes 20a, 20b. A separation membrane 22 separates the upstream and downstream chambers. The upper electrode 24 is the cathode and the lower electrode 26 is the anode.

A schematic diagram of the entire apparatus 10 is shown in Figure 6. As can be seen, the four chambers 12 to 18 are connected to three flow circuits. Each flow circuit consists of a reservoir and a circulating pump. Thus the upstream reservoir comprises upstream reservoir 30 and pump 32 and associated tubing, the downstream circuit comprises downstream reservoir 34, pump 36 and associated tubing and the buffer circuits share a single buffer reservoir 38 and a single buffer pump 40 and the circuit divides into two paths prior to passing through the two buffer chambers 12 and 14 and after passing through the chambers, the two paths rejoin.

The separation unit may be cooled by various means such as ice bricks or cooling coils (external apparatus) placed in the buffer reservoir to control its temperature. The upstream and downstream reservoir flow paths pass through the buffer reservoir and heat exchange between the upstream and the buffer reservoir, and the downstream and the buffer reservoir, maintains a low temperature, which is important for protein separation.

In the embodiment described, the buffer pump 40 is incorporated into the apparatus whereas the pumps 32 and 36 for the upstream and downstream may be external or internal.

The electrodes are connected to an external power supply 50 via electrical connecting leads. The power supply should ideally have a variable voltage up to 200 V and be capable of delivering up to one amp. Higher voltages, up to 500 V can be used provided that the total power (voltage x current) is maintained at less than 200W.

The buffer solution provides the ions which provide the current flow in the electrolytic cell. The buffer also stabilises the pH during separation and acts as the cooling medium. The buffer flow also helps prevent build up of gases at the electrodes generated by electrolysis.

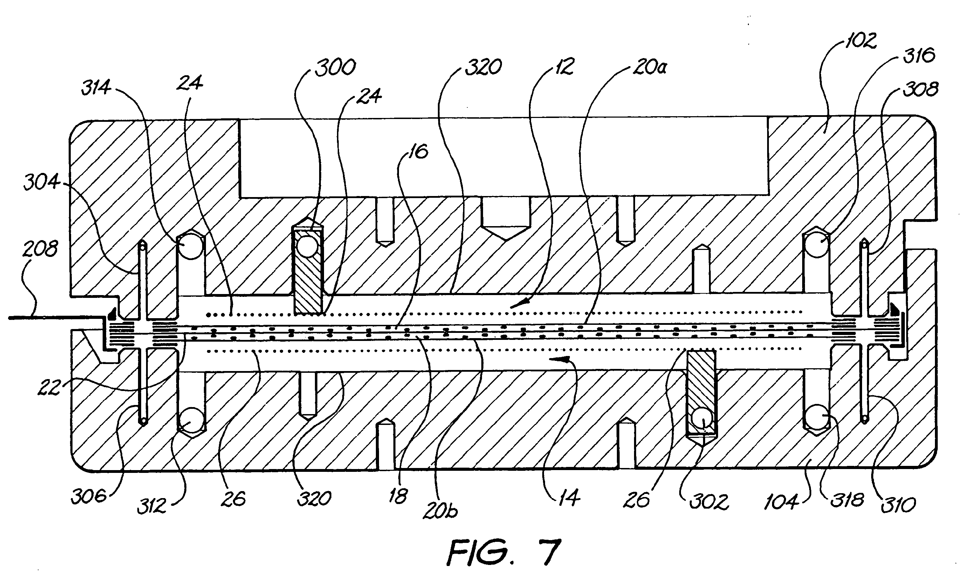

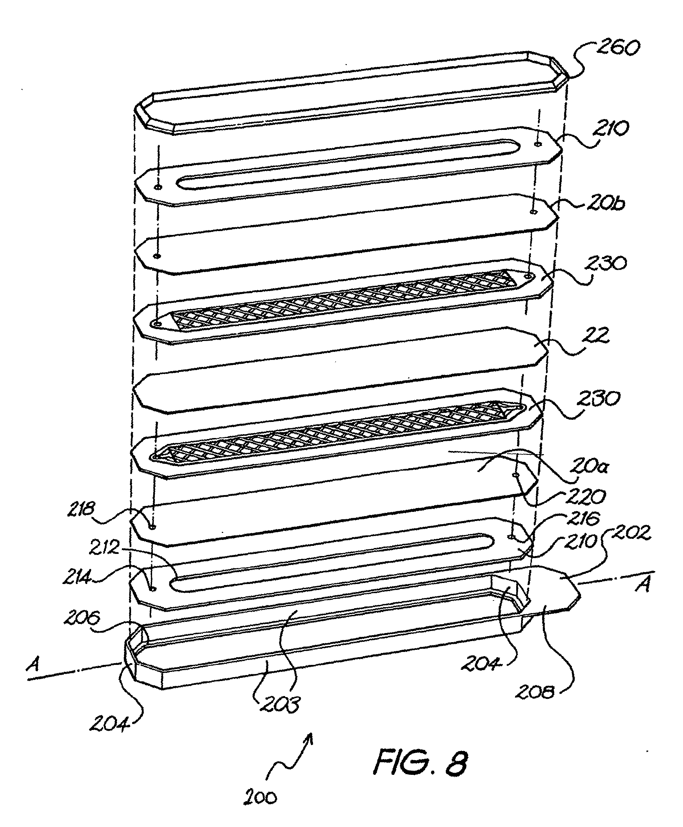

Figure 7 shows the separation unit housing a cartridge (or cassette) 200 and Figure 8 shows an exploded view of the cartridge 200. The separation unit includes an upper connection block 102 and a lower connection block 104 between which, in use, the cartridge is clamped.

The cartridge comprises a cartridge housing 202 which holds the components of the cartridge. The cartridge is generally elongate and includes two parallel elongate side walls 203 which extend along the longitudinal axis A-A of the cartridge. Each end of the cartridge includes three end walls 204 so that the cartridge is generally octagonal in plan view. A small flange 206 extends around the base of the walls 203, 204. The flange projects inwards towards the centre of the cartridge. On the right hand side of the cartridge, as oriented in Figure 8 there is a flap 208 which acts as a handle for holding or manipulating the cartridge. A planar silicon rubber gasket 210 whose exterior is generally octagonal is configured to fit inside the walls on the cartridge resting on the flange 206. The centre of the gasket defines an elongate cut out portion 212. Adjacent either end of the seal there is small cylindrical hole 214, 216.

Above the gasket 210 is located the first restriction membrane 20a whose external shape is generally the same as that of the interior of the cartridge so that it too fits inside the cartridge. The membrane has two holes 218, 220 adjacent either end of the membrane and positioned so that when the cartridge is assembled, those holes align with the holes 214, 216 of the gasket 210. The restriction membrane is typically formed from a thin substrate and coated with compounds to give a small pore size such as polyacrylamide gel so that only very small particles such as ions may pass through the gel. The pores are too small to allow the passage of macromolecules such as proteins.

Above the restriction membrane there is a first grid element 230. Above that grid element 230 is the separation membrane 22. The pore size of the separation membrane used depends on the size of the particular molecules being separated and the actual separation process being used.

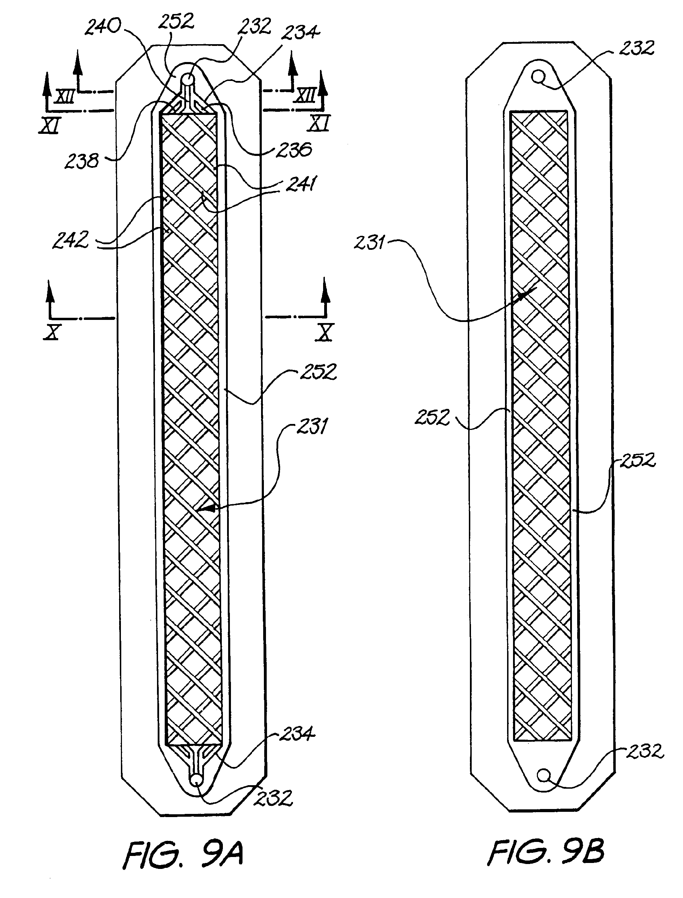

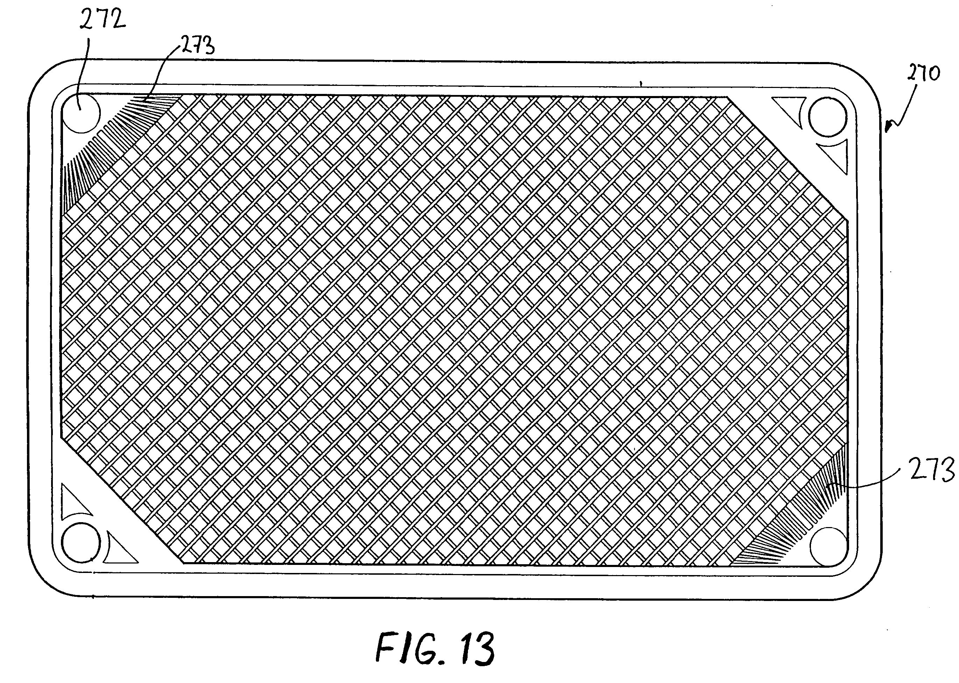

One function of the grid element is to keep membranes 20a and 22 apart. The grid element also has to provide a flow path for the upstream (or the downstream, since the grid elements for both are identical). The grid element is generally planar and the exterior of the grid element is shaped to fit inside the walls of the cartridge housing. The grid element is shown in more detail in Figures 9 through 12. An elongate rectangular cut-out portion 231 which incorporates lattice work is defined in the centre of the grid element. At each end of the grid, there is a through hole 232, which in the assembled cartridge is aligned with holes 214, 216 and 218, 220 of the gasket and restriction membrane, respectively. A triangular channel area 234 having sides and a base, extends and diverges from the hole to the cut out portion 231. Upstanding ribs 236, 238, 240, best seen in Figures 11 and 12, are defined in the channel area 234. Liquid flowing up through the hole 232 thus can pass along the triangular channel area 234 between the ribs and into the lattice. The ribs have two functions. First they direct the flow from the hole 232 and ensure that the liquid is evenly distributed along the cross-section of the lattice and secondly they provide support to the separation membrane 22 disposed above the grid element. The narrow channels defined by the ribs also increase the downstream's liquid velocity and pressure.

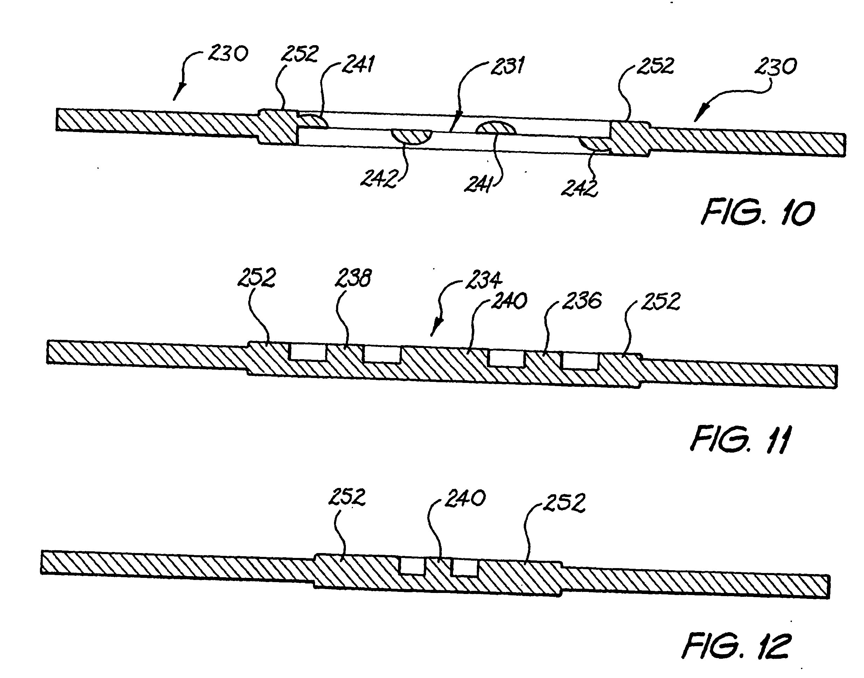

The lattice comprises a first array of spaced parallel members 241 extending at 45° to the longitudinal axis of the grid disposed above and integrally formed with a second lower set of spaced parallel members 242 extending at 90° to the first set of members. As illustrated in Figure 10, the upper and lower surfaces of the members are rounded. The absence of any sharp edges helps prevent damage to the separation membrane 22. Further, any increased pressure on the separation membrane 22 will increase the area of contact between the curved lattice members and the separation membrane providing extra support to the separation membrane. The lattice evenly distributes the flow of liquid over the separation membrane surface. The use of a first set of members disposed above a second set of members ensures that the liquid in the downstream is forced to move up and down and change direction frequently and this ensures mixing of the liquid and prevents static flow zones.

The reverse side of the grid element as illustrated in figure 9B is smooth and flat aside from the cut-out 231 and the holes 232, which ensures sealing between the buffer stream and the downstream.

The thickness of the grid element is minimised. With reference to Figure 10, the exterior areas of the element are 0.8mm thick. A sealing rib or ridge 252 extends around the periphery of the grid to improve sealing. The ridge is 1.2mm thick measured from one side of the grid element to the other. The distance between opposite peaks of the lattice elements 241, 242 measured from one side of the grid to the other is 1mm. The thinness of the grid has several advantages. First, a thin grid element increases the liquid velocity and pressure and thus results in a more even distribution of liquid over the separation membrane 22. The resultant higher liquid velocity can also assist in preventing fouling of the separation membrane 22. Fouling occurs when macromolecules block the pores of the separation membrane or stick to the separation membrane.

Also, the volume of liquid required is decreased which enables smaller sample volumes to be used for laboratory separations and this is significant where the samples are expensive.

Finally, the use of a thinner grid element enables less electrical power to be deposited into the liquid since power supplied to the liquid across the grid region, depends on the thickness of the grid. Thus, smaller power supply units can be used, and this makes the process more economical. If less heat is transferred into the liquid the temperature of the liquid remains lower. This is advantageous since high temperatures can destroy the sample and product..

The separation membrane 22 is selected depending on the application as discussed earlier in the description in relation to Figures 1 to 4. Following the separation membrane there is a mirror image of elements 210, 20a and 23b: there is a further grid element 230, a restriction membrane 20b, and a further gasket 210 symmetrically arranged about the separation membrane 22.
Those three components form the upstream and a part of the boundary of the buffer stream. The components are held in the cartridge 200 by means of a clip 260 which can be snap fitted or glued around the top of the walls 204 of the cartridge.

The main function of the cartridge is to hold the components together for insertion into the separation unit. The actual cartridge walls have no effect on the sealing of the system. If the system is correctly sealed, no liquid should contact the walls of the cartridge in use.

Figure 7 illustrates the cartridge located in the clamping unit between connecting blocks or jaws 102 and 104. The jaws house the inlets and outlets for feeding the buffer flows, the downstream and the upstream into the cartridge. The jaws include inlets 304 and 306 which respectively allow the upstream and downstream flows into the grid via the holes 214, 218 and 232. Outlets 308 and 310 are similarly provided. Inlets 312 and 314 and outlets 316 and 318 are provided for feeding buffer past the restriction membranes 20a, 20b along the flow path defined between a recess or channel 320 in the lower jaw 104 in which the anode is located or the upper jaw 102 which houses the cathode respectively, and the gasket 210 and the restriction membrane. The jaws are mounted between a simple screw clamp unit so that a simple screw operated knob can be used to open and close the jaws for changing the membrane cartridge.

The electrodes 26, 24 are formed from platinum coated titanium expanded mesh, in contrast with the standard electrodes usually used for electrolytic cells which comprise platinum wire. The platinum coated titanium expanded mesh used in the apparatus of the present invention has several advantages over platinum wire, in particular the ridged structure is self supporting and less expensive than platinum wire. The mesh also provides a greater surface area and allows higher currents to pass through the separation unit with less electrical power losses of the electrode. The electrodes have a longer useful life.

Finally, the larger surface area distributed over the buffer channel provides a more even electrical field for the separation process.

The electrodes are also located close to the restriction membranes. This enables less electrical power to be used and deposited into the buffer liquid and less heating of the buffer liquid occurs. Connectors 300 and 302 from the electrodes pass to sockets for connection of electrical power to the electrodes. The electrodes are shrouded to prevent accidental contact with an operator's fingers or the like.

In use, the cartridge is loaded into the apparatus, the jaws are closed to seal the components in place, the buffer solution and upstream and downstream are fed through the connection blocks and thence through the cartridge and the apparatus is connected to a power supply. The electrical power is set to the desired value and separation carried out using one of the processes described earlier with reference to Figures 1 to 4. After the separation has been carried out, the used cartridge may simply be removed and replaced with another cartridge ready for re-use. The upstream and downstream sample circuits may be cleaned and the buffer replaced if necessary. Following that, the apparatus is ready to carry out a further separation.

Figure 13 illustrates a grid element 270 for a second embodiment of the present invention which utilises a separation membrane having a much larger surface area than that of grid element 230. The principal of operation of this grid element is the same as that of the smaller grid element 230 although the holes 272 through which the downstream or upstream is fed are located in the corners of the grid element and there are more channels 273 feeding the streams from the hole to the central portion of the grid. The cartridge, casing and other components of the cartridge are also increased in area so that they have approximately the same area as the grid.

## Claims

1. A removable cartridge (200) for use in an electrophoresis apparatus (10), comprising:
a housing (202),
a separation membrane (22),
a first flow path defined along one side of the separation membrane (22),
a second flow path defined along an opposite side of the separation membrane (22), and
restriction membranes (20a, 20b) for isolating buffer flow from the first and second flow paths.

2. A cartridge (200) as claimed in claim 1, further comprising gaskets (210) positioned either side of the restriction membranes (20a, 20b) for sealing the contents of the housing (202) between an upper and a lower connection block (102, 104) of an electrophoresis apparatus (10) adapted to receive the cartridge (200).

3. A cartridge (200) as claimed in claim 1 or 2, wherein the first and second flow paths are defined by first and second grid elements (230).

4. A cartridge (200) as claimed in claim 3, wherein each grid element (230) is generally planar.

5. A cartridge (200) as claimed in claim 3 or 4, wherein the grid element (230) and the restriction membrane (20a, 20b) comprise a through hole (218, 220, 232) located near each end of the grid element (230) and the restriction membrane (20a, 20b) for the passage of liquid therethrough.

6. A cartridge (200) as claimed in claim 5, wherein the grid element (230) defines a central generally elongate portion, which in the assembled cartridge (200) in conjunction with two adjacent membranes (20a or 20b, 22) defines a flow path or channel from the hole (232) at one end of the grid element (230) to the hole (232) at the other end.

7. A cartridge (200) as claimed in claim 6, wherein the flow path includes a lattice means (241, 242) for supporting the separation membrane (22) and for mixing the flow.

8. A cartridge (200) as claimed in any one of claims 1 to 7, wherein the elements of the cartridge (200) apart from the cartridge housing (202) are generally planar and are assembled together in a sandwich-type construction.

9. An electrophoresis apparatus (10), comprising a removable cartridge (200) as claimed in any one of claims 1 to 8 between an upper and a lower connection block (102, 104).

10. An electrophoresis apparatus (10) as claimed in claim 9, wherein the upper and lower connection blocks (102, 104) define inlet and outlet means (304, 306, 308, 310) for feeding liquid into and out of the first flow path and into and out of the second flow path in the cartridge (200).

11. An electrophoresis apparatus (10) as claimed in claim 9 or 10, wherein the upper and lower connection blocks (102, 104) house electrodes (24, 26) and connection means for connecting the electrodes (24, 26) to a power source (50).

12. An electrophoresis apparatus (10) as claimed in claim 11, wherein the electrodes (24, 26) comprise titanium mesh coated with platinum.

13. An electrophoresis apparatus (10) as claimed in any one of claims 9 to 12, wherein the upper and lower connection blocks (102, 104) are made from a plastics material.

14. An electrophoresis apparatus (10) as claimed in any one of claims 9 to 13, wherein the upper and lower connection blocks (102, 104) define inlets and outlets (312, 314, 316, 318) for buffer flow paths.

15. An electrophoresis apparatus (10) as claimed in claim 14, wherein the electrodes (24, 26) are housed in channels (320) defined in the upper and lower connection blocks (102, 104) respectively, and wherein the boundaries of the buffer flow paths are defined by the channels (320) and the restriction membranes (20a, 20b) housed in the cartridge (200) and forming the upper and lower faces of the cartridge (200).

## Patentansprüche

1. Ausbaubare Patrone (200) für die Verwendung in einer Elektrophoresevorrichtung (10), die Folgendes umfasst:
ein Gehäuse (202),
eine Trennmembran (22),
einen entlang einer Seite der Trennmembran (22) definierten ersten Strömungspfad,
einen entlang einer gegenüberliegenden Seite der Trennmembran (22) definierten zweiten Strömungspfad,
Begrenzungsmembranen (20a, 20b) zum Isolieren von Pufferströmung vom ersten und zweiten Strömungspfad.

2. Patrone (200) nach Anspruch 1, die weiter auf beiden Seiten der Begrenzungsmembranen (20a, 20b) positionierte Dichtungen (210) umfasst, um den Inhalt des Gehäuses (202) zwischen einem oberen und einem unteren Verbindungsblock (102, 104) einer zum Aufnehmen der Patrone angepassten Elektrophoresevorrichtung (10) einzuschließen.

3. Patrone (200) nach Anspruch 1 oder 2, wobei der erste und der zweite Strömungspfad durch ein erstes und ein zweites Gitterelement (230) definiert sind.

4. Patrone (200) nach Anspruch 3, wobei die Gitterelemente (230) jeweils im Wesentlichen eben sind.

5. Patrone (200) nach Anspruch 3 oder 4, wobei das Gitterelement (230) und die Begrenzungsmembran (20a, 20b) ein durchgehendes Loch (218, 220, 232) für das Durchtreten von Flüssigkeit dadurch nahe jedem Ende des Gitterelements (230) und der Begrenzungsmembran (20a, 20b) aufweisen.

6. Patrone (200) nach Anspruch 5, wobei das Gitterelement (230) einen mittleren im Allgemeinen länglichen Teil aufweist, der in der montierten Patrone (200) zusammen mit den beiden angrenzenden Membranen (20a oder 20b, 22) einen Strömungspfad oder Kanal vom Loch (232) an einem Ende des Gitterelements (230) zum Loch (232) am anderen Ende definiert.

7. Patrone (200) nach Anspruch 6, wobei der Strömungspfad ein Gittermittel (241, 242) zum Halten der Trennmembran (22) und zum Mischen des Stroms enthält.

8. Patrone (200) nach einem der Ansprüche 1 bis 7, wobei die Elemente der Patrone (200) mit Ausnahme des Patronengehäuses (202) im Allgemeinen eben sind und in einer sandwichartigen Konstruktion zusammenmontiert sind.

9. Elektrophoresevorrichtung (10), die eine ausbaubare Patrone (200) nach einem der Ansprüche 1 bis 8 zwischen einem oberen und einem unteren Verbindungsblock (102, 104) umfasst.

10. Elektrophoresevorrichtung (10) nach Anspruch 9, wobei der obere und der unter Verbindungsblock (102, 104) Einlass- und Auslassmittel (304, 306, 308, 310) definieren, um Flüssigkeit in und aus dem ersten Strömungspfad und in und aus dem zweiten Strömungspfad in der Patrone (200) zu leiten.

11. Elektrophoresevorrichtung (10) nach Anspruch 9 oder 10, wobei der obere und der untere Verbindungsblock (102, 104) Elektroden (24, 26) und Anschlussmittel zum Anschließen der Elektroden (24, 26) an eine Stromquelle (50) aufnimmt.

12. Elektrophoresevorrichtung (10) nach Anspruch 11, wobei die Elektroden (24, 26) mit Platin beschichtetes Titangitter umfassen.

13. Elektrophoresevorrichtung (10) nach einem der Ansprüche 9 bis 12, wobei der obere und der untere Verbindungsblock (102, 104) aus einem Kunststoff hergestellt sind.

14. Elektrophoresevorrichtung (10) nach einem der Ansprüche 9 bis 13, wobei der obere und der unter Verbindungsblock (102, 104) Einlässe und Auslässe (312, 314, 316, 318) für Pufferströmungswege definieren.

15. Elektrophoresevorrichtung (10) nach Anspruch 14, wobei die Elektroden (24, 26) in Kanälen (320) aufgenommen sind, die im oberen beziehungsweise im unteren Verbindungsblock (102, 104) definiert sind und wobei die Grenzen der Pufferströmungspfade durch die Kanäle (320) und die Begrenzungsmembranen (20a, 20b) definiert sind, die in der Patrone (200) aufgenommen sind und die Unter- und Oberseite der Patrone (200) bilden.

## Revendications

1. Cartouche amovible (200) destinée à être utilisée dans un appareil d'électrophorèse (10), qui comporte :
un logement (202),
une membrane de séparation (22),
un premier chemin d'écoulement défini le long d'un côté de la membrane de séparation (22),
un deuxième chemin d'écoulement défini le long d'un côté opposé de la membrane de séparation (22), et
des membranes de restriction (20a, 20b) pour isoler l'écoulement tampon des premier et deuxième chemins d'écoulement.

2. Cartouche (200) selon la revendication 1, qui comporte en outre des joints d'étanchéité (210) positionnés de part et d'autre des membranes de restriction (20a, 20b) pour fermer d'une manière étanche le contenu du logement (202) entre un bloc de connexion supérieur et un bloc de connexion inférieur (102, 104) d'un appareil d'électrophorèse (10) adapté pour recevoir la cartouche (200).

3. Cartouche (200) selon la revendication 1 ou 2, **caractérisée en ce que** les premier et deuxième chemins d'écoulement sont définis par des premier et deuxième éléments de grille (230).

4. Cartouche (200) selon la revendication 3, **caractérisée en ce que** chaque élément de grille (230) est en général planaire.

5. Cartouche (200) selon la revendication 3 ou 4, **caractérisée en ce que** l'élément de grille (230) et la membrane de restriction (20a, 20b) comportent un trou traversant (218, 220, 232) situé près de chaque extrémité de l'élément de grille (230) et de la membrane de restriction (20a, 20b) pour le passage de liquides à travers ceux-ci.

6. Cartouche (200) selon la revendication 5, **caractérisée en ce que** l'élément de grille (230) définit une portion centrale en général allongée qui, dans la cartouche assemblée (200) conjointement avec deux membranes adjacentes (20a ou 20b, 22), définit un chemin d'écoulement ou un canal depuis le trou (232) à une extrémité de l'élément de grille (230) jusqu'au trou (232) à l'autre extrémité.

7. Cartouche (200) selon la revendication 6, **caractérisée en ce que** le chemin d'écoulement incorpore un moyen en treillis (241, 242) pour supporter la membrane de séparation (22) et pour mélanger l'écoulement.

8. Cartouche (200) selon l'une quelconque des revendications 1 à 7, **caractérisée en ce que** les éléments de la cartouche (200), mis à part le logement de cartouche (202), sont en général planaires et assemblés ensemble dans une construction de type sandwich.

9. Appareil d'électrophorèse (10), qui comporte une cartouche amovible (200) selon l'une quelconque des revendications 1 à 8 entre un bloc de connexion supérieur et un bloc de connexion inférieur (102, 104).

10. Appareil d'électrophorèse (10) selon la revendication 9, **caractérisé en ce que** les blocs de connexion supérieur et inférieur (102, 104) définissent des moyens d'entrée et de sortie (304, 306, 308, 310) pour acheminer un liquide dans le premier chemin d'écoulement et l'en faire sortir et l'acheminer dans le deuxième chemin d'écoulement et l'en faire sortir dans la cartouche (200).

11. Appareil d'électrophorèse (10) selon la revendication 9 ou 10, **caractérisé en ce que** les blocs de connexion supérieur et inférieur (102, 104) logent des électrodes (24, 26) et un moyen de connexion pour connecter les électrodes (24, 26) à une source de puissance (50).

12. Appareil d'électrophorèse (10) selon la revendication 11, **caractérisé en ce que** les électrodes (24, 26) comportent des mailles en titane revêtues de platine.

13. Appareil d'électrophorèse (10) selon l'une quelconque des revendications 9 à 12, **caractérisé en ce que** les blocs de connexion supérieur et inférieur (102, 104) sont fabriqués dans un matériau en plastique.

14. Appareil d'électrophorèse (10) selon l'une quelconque des revendications 9 à 13, **caractérisé en ce que** les blocs de connexion supérieur et inférieur (102, 104) définissent des orifices d'entrée et des orifices de sortie (312, 314, 316, 318) pour les chemins d'écoulement tampon.

15. Appareil d'électrophorèse (10) selon la revendication 14, **caractérisé en ce que** les électrodes (24, 26) sont logées dans des canaux (320) définis dans les blocs de connexion supérieur et inférieur respectifs (102, 104), et **caractérisé en ce que** les limites des chemins d'écoulement tampon sont définies par les canaux (320) et les membranes de restriction (20a, 20b) logés dans la cartouche (200) et formant les faces supérieure et inférieure de la cartouche (200).
